# FASCICULE DE BREVET EUROPEEN

(11) **EP 0 868 481 B1**
(45) Date de publication et mention de la délivrance du brevet: **13.02.2002**
(21) Numéro de dépôt: 96943150.1
(22) Date de dépôt: 19.12.1996
(51) Int. Cl.: C08L 23/16, C08L 23/04

(54) **COMPOSITION PULVERULENTE THERMOPLASTIQUE POLYOLEFINIQUE AYANT DES PROPRIETES ELASTIQUES**
THERMOPLASTISCHE POLYOLEFINPULVER-ZUSAMMENSETZUNG MIT ELASTISCHEN EIGENSCHAFTEN
POWDERED THERMOPLASTIC POLYOLEFIN COMPOSITION HAVING RESILIENT PROPERTIES

(30) Priorité: 19.12.1995 FR 9515593
(43) Date de publication de la demande: 07.10.1998
(73) Titulaire: VISTEON SYSTEMES INTERIEURS S.A.S., 92927 La Défense Cédex (FR)
(72) Inventeur: VALLIGNY, Dominique, F-59000 Lille (FR); MARCINIAK, Tony, F-59320 Sequedin (FR)
(74) Mandataire: Tilloy, Anne-Marie
(86) Numéro de dépôt international: FR9602034
(87) Numéro de publication internationale: WO9722665

(56) Documents cités:
- EP-A- 0 508 801
- EP-A- 0 637 610
- WO-A-95/35344

## Description

### DOMAINE DE L'INVENTION

L'invention concerne une composition thermoplastique polyoléfinique ayant des propriétés élastiques, se présentant sous la forme de fines particules lui octroyant le caractère d'une poudre.

L'invention concerne plus spécialement une composition thermoplastique polyoléfinique ayant des propriétés élastiques, se présentant sous la forme d'une poudre, pour la réalisation de peaux, par le procédé de moulage sur un matériel conventionnel, par écoulement libre de la poudre, connu sous la dénomination SLUSH MOLDING.

L'invention concerne également le procédé de préparation de ladite composition.

L'invention concerne enfin les articles moulés réalisés par la mise en oeuvre de la composition.

### ARRIERE-PLAN TECHNIQUE DE L'INVENTION

De nombreuses pièces qui sont réalisées en matériaux polymères interviennent de plus en plus dans la construction automobile : telles que des planches de bord, des panneaux de porte, des consoles, etc. Certaines d'entre elles interviennent d'une manière très visible dans l'architecture interne du véhicule, de telle sorte qu'elles doivent offrir, sur la surface visible, un aspect esthétique agréable reproduisant, par exemple, l'aspect du cuir. Cette surface visible constitue la peau de la pièce. Cette peau, colorée dans la masse, doit également posséder d'autres qualités qui sont une bonne résistance à la rayure et aux agents chimiques tels que les solvants, ainsi qu'une bonne tenue aux variations thermiques, allant du grand froid à l'exposition prolongée au soleil en atmosphère confinée.

La peau ainsi évoquée, peut concerner toutes les pièces (encore appelées inserts) réalisées en matériaux polymères, particulièrement celles entrant dans l'architecture interne du véhicule : depuis les inserts rigides, généralement réservés aux véhicules de bas de gamme, jusqu'aux inserts moussés équipant des véhicules plus élaborés.

Dans le cas des inserts rigides, la peau ou tout au moins son aspect, est obtenue grâce à la gravure du moule, soit à partir de la matière constitutive de l'insert, soit encore, par exemple, par une co-injection de deux matières différentes, l'une pour l'insert, l'autre pour la peau.

Dans le cas des inserts moussés, la peau est généralement réalisée indépendamment de l'insert lui-même, dans une matière compatible d'une part avec la mousse ultérieurement développée entre ladite peau et l'insert, et d'autre part avec les laques de finition telles que les laques de polyuréthanes, déposées sur la surface visible de ladite peau, pour les mettre, en cas de nécessité, en conformité avec le cahier des charges des constructeurs automobiles.

Pour réaliser la peau d'inserts tels que la planche de bord par exemple, des procédés divers sont proposés dont l'une des préoccupations est de produire une peau avec le moins de contrainte résiduelle possible.

Dans un premier type de procédé qui met en oeuvre une feuille à base de polypropylène préalablement fabriquée, les peaux de planches de bord sont réalisées au moyen du procédé de thermoformage positif ou négatif. Mais le thermoformage pratiqué, qu'il soit positif (l'aspect de surface de la peau existe sur la feuille avant le thermoformage) ou négatif (l'aspect de surface est donné à la feuille par le moule au thermoformage) met généralement en oeuvre, pour des raisons aussi bien techniques qu'économiques, des feuilles de préférence de faibles épaisseurs (préalablement chauffées).
De ce fait, les formes de peaux obtenues sont très limitées et sont dotées de contraintes résiduelles qui, lorsqu'elles se relâchent par vieillissement, génèrent des craquelures esthétiquement très gênantes.

Dans un type de procédé, les peaux de planches de bord sont réalisées selon le procédé slush molding (précédemment évoqué) qui permet de les obtenir généralement exemptes de contraintes résiduelles.
Par lui-même, le procédé slush molding est un procédé de moulage utilisant du matériel conventionnel (moule en nickel électroformé et chauffé par un système à air chaud) qui permet de réaliser les peaux souhaitées en mettant en oeuvre une poudre de polymère à base de polyvinylchlorure (PVC) par la technique de l'écoulement libre de poudre.
Les peaux ainsi réalisées, même si elles ne comportent plus ou très peu de contraintes résiduelles, et même si elles satisfont pour l'essentiel au cahier des charges des constructeurs automobiles, présentent des inconvénients immédiats ou potentiels, même à court terme.

Parmi les inconvénients immédiats, les peaux à base de PVC sont assez fortement chargées, de par leur composition, en matières volatiles (en particulier les plastifiants du PVC). Ces matières, à l'usage et sous l'effet des variations de température de l'habitacle du véhicule, sont volatilisées et migrent sur les zones froides pour s'y condenser : c'est le phénomène bien connu de la lente opacification des pare-brise des véhicules, particulièrement gênante pour la vue du conducteur et le bon contrôle du véhicule.

Parmi les inconvénients potentiels, l'usage du PVC apparaît, dans l'état actuel du recyclage en fin de vie des matériaux entrant dans la fabrication des véhicules automobiles, être condamné à plus ou moins court terme pour une meilleure protection de l'environnement.

Car les matériaux polymères résultant du broyage des véhicules usagés sont actuellement utilisés (en tout ou partie) comme combustible dans certains types de fours, tels que par exemple des fours de cimenterie.
Or, le PVC transformé en matière combustible émet, lors de sa combustion, des effluents gazeux acides, nocifs pour l'environnement.

C'est pourquoi, pour répondre à une double préoccupation des constructeurs de véhicules automobiles et des pouvoirs publics, qui est d'abord celle de la protection de l'environnement (éliminer les effluents gazeux nocifs engendrés par la combustion des déchets en matières polymères et en limiter la mise en décharge) et ensuite celle du recyclage le plus complet des déchets (formés de matériaux polymères) résultant de la destruction par broyage des véhicules usagés, les constructeurs de véhicules automobiles envisagent sérieusement de limiter le nombre de polymères présents dans chaque véhicule mais simultanément d'en augmenter les quantités relatives, et en particulier de substituer au PVC des polyoléfines, pour permettre un recyclage plus facile. Ainsi, les véhicules automobiles seraient équipés de pièces, telles que planches de bord moussées, dont la peau, la mousse et l'insert rigide seraient réalisés en polyoléfines recyclables en fin de vie des véhicules.

Pour ce faire, des compositions thermoplastiques polyoléfiniques ont déjà été proposées.

A ce titre, le document EP0508801 décrit une composition en poudre d'élastomères thermoplastiques pour le moulage en poudre qui comprend :
- soit (i): une poudre d'un élastomère thermoplastique comprenant une composition composée d'un caoutchouc de copolymère éthylène-alpha-oléfine et d'une résine de polyoléfine ;
- soit (ii): une poudre d'un élastomère thermoplastique comprenant une composition partiellement réticulée composée d'un caoutchouc de copolymère éthylène-alpha-oléfine et d'une résine de polyoléfine,
cette composition de poudre étant utilisable selon le procédé slush molding.

Mais, selon ce document :
- pour favoriser la fluidité à l'état fondu et améliorer en même temps la flexibilité de l'article moulé, le caoutchouc de copolymère d'oléfine est dilué à l'huile et comprend ainsi un caoutchouc de copolymère éthylène-alpha-oléfine avec addition d'une huile minérale comme agent assouplissant à un taux relativement élevé par rapport à l'élastomère polyoléfinique. Ces huiles constituent, en fait, un risque d'émission de matières volatiles polluantes pour l'environnement et opacifiantes pour les pare-brise des véhicules, mais aussi un risque d'altération de l'aspect de la peau lors de son vieillissement : le phénomène d'exsudation n'est pas éliminé.
- enfin, pour permettre un démoulage aisé de la peau, des agents de démoulage externe (par exemple le diméthylsiloxane) déposés sur le moule ou interne à la composition (par exemple le méthylpolysiloxane) sont mis en oeuvre : ils constituent également un risque de pollution directe de l'environnement des ateliers de fabrication, mais surtout rendent plus difficile l'opération ultérieure de laquage des peaux actuellement nécessaire pour les mettre en conformité avec le cahier des charges des constructeurs automobiles (aspect, niveau de matité-brillance, résistances à la rayure, à l'abrasion et aux agents chimiques, dont les solvants).

Un autre document, le brevet américain US 5,302,454 décrit également une composition polyoléfinique thermoplastique ayant des propriétés élastiques utilisables dans le domaine de l'automobile, qui se présente sous forme pulvérulente.

Cette composition inclut trois composants :
- le premier étant du polypropylène (index isotactic compris entre 95 et 98) ou un copolymère de propylène et de l'éthylène et/ou d'alphaoléfine du type CH₂ = CHR où R est un radical alkyl ayant 2 à 6 carbones, contenant plus de 85 % en poids de propylène et ayant un index isotactic supérieur à 85 ;
- le deuxième étant une fraction d'un polymère contenant de l'éthylène (insoluble dans le xylène à température ambiante) ;
- le troisième étant une fraction d'un copolymère d'éthylène-propylène amorphe, contenant de 40 à 70 % en poids d'éthylène (soluble dans le xylène à température ambiante).

Toutefois, une telle composition apparaît ne pas pouvoir être mise facilement en oeuvre dans le procédé slush molding pour la réalisation de peaux, sans en pratiquer une certaine modification par l'ajout d'agents particuliers tels que des résines polyoléfiniques par exemple (risque de mottage, difficulté de démoulage).

Enfin, un autre document, la demande de brevet européen, publiée sous le numéro EP0637610, décrit un procédé et une composition polyoléfinique thermoplastique utilisée en slush molding pour la fabrication d'articles (laminant) qui se présentent sous la forme pulvérulente.

Cette composition inclut trois fractions :
- la première (10 à 40 parties en poids) est un homopolymère de propylène ou un copolymère de propylène avec l'éthylène et/ou une alpha-oléfine en C₄ à C₁₀ ;
- la deuxième (0 à 20 parties en poids) d'un copolymère d'éthylène et de propylène et/ou d'alpha-oléfine en C₄ à C₁₀ ;
- la troisième (50 à 80 parties en poids) d'un copolymère élastomérique, de l'éthylène et de propylène et/ou alpha-oléfine en C₄ à C₁₀ et optionnellement avec une quantité mineure d'un diène ;

Selon ce document, la viscosité intrinsèque souhaitée pour la composition polymère utilisée dans le procédé concerné peut être obtenue :
- soit directement par polymérisation, contrôlée par des agents de régulation du poids moléculaire ;
- soit en soumettant la composition polymère à une action de "visbreaking" qui consiste à couper les chaînes moléculaires présentes au moyen de peroxyde.

Dès lors, le problème de la mise en oeuvre de compositions polyoléfiniques de substitution au polychlorure de vinyle dans la réalisation des peaux pour l'habillage moussé ou non des inserts reste pratiquement entier.

Ainsi, les objectifs que vise l'invention sont de disposer d'une composition polyoléfinique ayant des propriétés élastiques, pour la fabrication de peaux, qui :
- se présente sous l'aspect d'une fine poudre de bonne coulabilité, pour être exploitée selon le procédé slush molding ;
- dispose d'une capacité de fusion substantiellement améliorée lors de son contact avec le moule chaud.
- lors de sa mise en oeuvre, procure aux peaux toutes les caractéristiques exigées par le cahier des charges fonctionnelles des constructeurs automobiles, en particulier une bonne résistance thermique, à la rayure, à l'abrasion, aux agents chimiques dont les solvants ;
- permet l'obtention de peaux dénuées de contraintes résiduelles ;
- est compatible avec les opérations ultérieures de laquage si ce laquage est nécessaire ;
- est dénuée d'agents ayant de fortes tensions de vapeur ;
- ne manifeste pas de phénomènes de blanchiment en contre dépouille lors du démoulage ou de la manipulation ultérieure de la peau ;
- autorise un excellent démoulage de la pièce réalisée ;
- soit intégralement recyclable après usage, dans la filière automobile, pour répondre aux exigences de la protection de l'environnement ;
- et réponde aux exigences techniques et économiques.

### SOMMAIRE DE L'INVENTION

Consciente des inconvénients précités, la demanderesse a poursuivi, à travers ses recherches, l'établissement d'une composition pulvérulente polyoléfinique répondant aux objectifs qu'elle s'est imposée.

La composition thermoplastique polyoléfinique selon l'invention, ayant des propriétés élastiques, destinée à la production de peaux, par écoulement libre sur un moule chaud, se présentant sous la forme de poudre, qui contient des fractions, l'une étant formée d'homo- ou de copolymère à base de propylène, une autre étant formée d'un copolymère à base d'éthylène, et la dernière étant formée d'un élastomère, se caractérise en ce qu'elle se compose :
a) de 97 à 5 parties en poids et préférentiellement de 95 à 10 parties en poids d'une matrice composée d'au moins un polymère contenant au moins 50 % en mole de propylène et d'au moins un élastomère polyoléfinique au moins partiellement réticulé ;
b) de 3 à 95 parties en poids et préférentiellement de 5 à 90 parties en poids d'au moins un polymère contenant au moins 50 % en mole d'éthylène ;
c) de 0 à 6 parties en poids d'un agent de démoulage interne pour 100 parties en poids des composants "a" et "b".

### DESCRIPTION DETAILLEE DE L'INVENTION

Ainsi, l'invention concerne une composition pulvérulente polyoléfinique ayant des propriétés élastiques, mise en oeuvre selon le procédé slush molding, pour la fabrication de peaux dont la caractéristique essentielle recherchée est de disposer d'une bonne fusion sur moule, préférentiellement comprise entre 200° C et 240° C.

Mais elle concerne également un procédé de préparation de cette composition, ainsi que les articles moulés par la mise en oeuvre de ladite composition.

Selon l'invention, la composition polyoléfinique thermoplastique ayant des propriétés élastiques comporte d'abord une matrice polymère. Cette matrice polymère constituant le composant "a" de la composition est un mélange qui comprend au moins un polymère thermoplastique contenant au moins 50 % en mole de propylène et au moins un élastomère polyoléfinique au moins partiellement réticulé.

Le polymère thermoplastique contenant au moins 50 % en mole de propylène qui intervient dans le composant "a" peut être le polypropylène lui-même (homopolymère semi-cristallin) ou bien un copolymère semi-cristallin de propylène-éthylène, un mélange de polypropylène homopolymère semi-cristallin et d'un copolymère semi-cristallin de propylène-éthylène précité ou encore le polypropylène (homopolymère) à blocs amorphes et semi-cristallins et les copolymères de propylène-éthylène ou d'alpha-oléfines à blocs amorphes et semi-cristallins.

Le copolymère semi-cristallin de propylène-éthylène intervenant dans le composant "a" contient de faibles quantités d'éthylène, généralement comprises entre 2% et 5%, exprimés en poids, de façon que des propriétés essentielles soient acquises comme la facilité de la mise en oeuvre par une baisse de la température de fusion de la matrice, l'absence de blanchiment au choc et à la pliure, et la facilité de démoulage pour des pièces à contre dépouille.

L'élastomère polyoléfinique thermoplastique au moins partiellement réticulé entrant dans la composition de la matrice constituant le composant "a" peut être choisi parmi les élastomères thermoplastiques :
- mis en oeuvre seuls, tels que : l'éthylène-propylène-caoutchouc (EPR), l'éthylène-propylène-diène-monomère (EPDM), le styrène-butadiène-styrène (SBS), le styrène-éthylène-butadiène-styrène (SEBS), le styrène-butadiène-caoutchouc (SBR), au moins partiellement réticulé ;
- ou mis en oeuvre selon un mélange, soit en réacteur, soit par extrusion, de polypropylène avec au moins un élastomère, tels que par exemple le polypropylène/éthylène-propylène-caoutchouc (PP/EPR), le polypropylène/éthylène-propylène-diène monomère (PP/EPDM), dont la fraction élastomèrique est au moins partiellement réticulée.

La matrice de la composition thermoplastique polyoléfinique selon l'invention se compose, exprimée en % en poids :
- de 5 à 95 % et préférentiellement de 80 à 20 % en poids d'au moins un polymère contenant au moins 50 % en mole de propylène ;
- et de 95 à 5 % et préférentiellement de 20 à 80 % en poids d'au moins un élastomère polyoléfinique au moins partiellement réticulé.

Selon l'invention, la matrice polymère constituant le composant "a" possède un "indice de fluidité" (M.F.I.) défini par la norme ASTM D 1238L (230°C et 2,16 kg) compris entre 5 et 100 g en 10 minutes et de préférence compris entre 25 et 70 g en 10 minutes, et un module d'élasticité en flexion (MEF) défini par la norme ASTM D70, au moins égal à 20 MPa et préférentiellement au moins égal à 50 MPa.

La mise en oeuvre des divers constituants de la matrice précitée dans la composition selon l'invention pour l'application slush molding laisse à penser qu'elle pourrait conduire à l'exsudation des faibles masses moléculaires des élastomères présents, pouvant représenter jusqu'à 10 % en poids de la masse totale. Mais dès lors que la composition de la matrice est choisie de telle sorte que son module d'élasticité en flexion soit au moins égal à 20 MPa, et préférentiellement au moins égal à 50 MPa, l'exsudation en est d'autant plus affaiblie.

Dans des compositions polymères antérieures (selon la demande internationale PCT publiée sous le numéro WO95/35344) comprenant des élastomères, le phénomène d'exsudation était traité avec un succès souvent incomplet, au moyen d'agents tels que des résines choisies dans le groupe des élastomères du type éthylène-propylène-diène-monomère (EPDM) ou éthylène-propylène-caoutchouc (EPR), non réticulées ou au moins partiellement réticulés et préférentiellement associés à du polypropylène, résines ayant un début de plage de fusion supérieur à 140° C.

Dans le cas où subsisterait pour la matrice polymère un risque d'exsudation ultérieure, il est possible, pour éliminer ce phénomène, de réaliser la réticulation des divers composants au moyen d'un agent approprié, tel qu'un peroxyde, un silane, ou d'effectuer un greffage chimique au moyen d'acide acrylique, d'acide méthacrylique, d'acrylates ou méthacrylates d'alkyle dans lesquels l'alkyle est une chaîne hydrocarbonée en C₁ à C₈, ou d'anhydride maléïque.

La matrice peut être préparée par introduction et mélange en réacteur ou dans une extrudeuse d'au moins un polymère contenant au moins 50 % en mole de propylène et d'au moins un élastomère au moins partiellement réticulé.

Divers adjuvants de type connu et couramment mis en oeuvre dans des compositions destinées au procédé slush molding peuvent également être introduits dans la composition selon l'invention lors de la préparation du mélange des constituants de la matrice, ou même ultérieurement, lors de la préparation de la composition selon l'invention, par la mise en oeuvre de ses divers constituants "a", "b" et "c".

Ces divers adjuvants sont, par exemple, des stabilisants thermiques ou photochimiques, des lubrifiants, des antistatiques, des ignifugeants ou des anti-oxydants.

Selon l'invention, la composition polyoléfinique thermoplastique ayant des propriétés élastiques comporte également au moins un polymère contenant au moins 50 % en mole d'éthylène constituant le composant "b". Ce polymère peut être le polyéthylène de basse densité (PEBD), le polyéthylène linéaire de basse densité (PEBDL), ou bien un mélange de polyéthylène de basse densité (PEBD) avec un polyéthylène haute densité (PEHD), ce mélange contenant au plus 50 % de PEHD, ou encore un copolymère d'éthylène-alpha-oléfine dans lequel l'alpha-oléfine est un motif en C₃ à C₁₀, tel que, plus précisément, les copolymères d'éthylène-octène (POE) comportant entre 5 et 40 % en poids d'octène, d'éthylène-téréphtalate (PET), d'éthylène-vinylacétate (EVA), d'éthylène-acrylate d'alkyle, d'éthylène-méthacrylate d'alkyle dans lesquels l'alkyle est une chaîne hydrocarbonée en C₁ à C₈, éventuellement modifiés par un autre monomère tel que, par exemple l'anhydride maléïque, ou bien un copolymère d'éthylène et de tétrafluoroéthylène, des ionomères salifiés ou non. Préférentiellement, le polymère contenant au moins 50 % en mole d'éthylène constituant le composé "b" a un début de plage de fusion au plus égal à 140° C.

Le polymère à base de monomère éthylène constituant le composant "b" de la composition selon l'invention permet une amélioration substantielle de la capacité de fusion de ladite composition et conduit à l'obtention d'un produit finalisé dont les caractéristiques sont proches du cahier des charges habituellement imposé.

Selon l'invention, la composition polyoléfinique thermoplastique ayant des propriétés élastiques peut comporter au moins un agent de démoulage interne constituant le composant "c".

L'agent de démoulage interne peut être choisi parmi l'un des agents classiquement connus appartenant au groupe comprenant la famille des dérivés montaniques et d'ester montaniques, les sels de stéarate, les amines, les amides, les résines hydrocarbonées hydrogénées, les cires de polyéthylène, polypropylène et copolymère éthylène/acétate de vinyle (EVA), les résines de copolymérisation de monomères aliphatiques et/ou aromatiques.

Préférentiellement, l'agent de démoulage interne peut être choisi dans le groupe formé par les stéarates alcalinoterreux, dont le plus utilisé est le stéarate de calcium, et les amides de l'acide stéarique (C₁₇H₃₅-CONH₂) tels que l'éthylène-bis-stéaramide (EBS) mis en oeuvre seul ou en mélange.

L'agent de démoulage interne qui, en finalité, est préférentiellement mis en oeuvre dans la composition selon l'invention, est le stéarate de magnésium, pour lequel la demanderesse a constaté expérimentalement l'absence du phénomène de migration à travers la peau antérieurement observé, et dont les caractéristiques sont :
- stéarate de magnésium [Mg(C₁₈H₃₅O₂)₂]: poudre fine
   . poids spécifique apparent : 0,2 g/litre
   . point de fusion : environ 140 à 150°C
   . taux de métal : 4,5 à 5,1

Le stéarate de magnésium mis en oeuvre comme agent de démoulage interne présente de nombreux avantages, dont les plus marquants sont énoncés ci-après :
- il remplace aisément, et seul, le couple constitué par le stéarate de calcium/éthyl-bis amide, dans lequel l'éthyl-bis amide qui est un réducteur de viscosité à chaud de la composition polymère les contenant, favorise, par trop, la migration du stéarate de calcium vers l'interface moule-matière ;
- il est utilisé, au même titre que le stéarate de calcium, comme agent antioxydant des polypropylènes, en limitant, voir empêchant, la dégradation thermique oxydante du polymère en surface, à l'origine d'une diminution des caractéristiques de résistance à la rayure, à l'abrasion, et aux solvants ;
- il assure par sa présence un excellent démoulage de la peau ;
- et il permet le laquage de la peau avec une bonne adhésion de la laque à la suite d'une préparation particulière, telle que flammage ou utilisation d'un primaire d'adhésion.

Le laquage, dans le cas où il est souhaité, est habituellement réalisé par un moyen connu, tel que par le dépôt d'une fine couche de polyuréthane sur la surface externe de la peau, ou encore par un greffage chimique en surface.

En pratique, cette opération de laquage a pour finalité d'améliorer substantiellement certaines des caractéristiques de la peau, telles que, par exemple, en augmenter la résistance à l'abrasion, à la rayure, aux solvants, mais aussi permettre l'accrochage d'une peinture, même localement, ou le collage d'un objet à caractère esthétique par exemple.

L'agent de démoulage interne peut être introduit dans la composition de l'invention à l'occasion d'une opération de mélange, soit au moment de la préparation de la matrice constituant le composant "a"", soit encore au moment où s'effectue le mélange de ladite matrice avec le polymère à base d'éthylène constituant le composant "b" lorsque ce dernier est mis en oeuvre.

L'agent de démoulage interne est introduit dans la composition préférentiellement à raison de 0,1 à 6 parties en poids et très préférentiellement à raison de 0,5 à 3 parties en poids pour 100 parties en poids des composants "a" et "b".

La composition selon l'invention est préparée selon un procédé de fabrication qui consiste :
- à effectuer le mélange des constituants de la composition dans une zone d'extrusion ;
- à pratiquer un broyage cryogénique des granulés provenant de l'extrusion, d'une manière telle qu'il en résulte une poudre polyoléfinique thermoplastique ayant des propriétés élastiques.

De même, la composition selon l'invention peut être préparée par microgranulation, qui consiste en une extrusion à travers une microfilière et une coupe rasante en milieu aqueux dont il résulte une poudre polyoléfinique thermoplastique ayant des particules de forme quasi sphérique. La poudre polyoléfinique thermoplastique selon l'invention, obtenue selon un procédé adapté, tel que, par exemple, ceux précités, a une granulométrie maximale d'environ 400 µm et médiane d'environ 300 µm, mais préférentiellement d'environ 250 µm.

A l'opposé des particules de P.V.C. mis en oeuvre dans les procédés antérieurs slush molding qui, provenant d'un procédé à lit fluidisé, ont une forme sensiblement sphérique, favorisant l'écoulement de la poudre lors de l'alimentation du moule, les compositions polyoléfiniques thermoplastiques, après leur broyage cryogénique, sont formées de particules microscopiques pouvant être dotées de formes anguleuses.

C'est pourquoi, pour assurer le meilleur écoulement sur le moule de la poudre résultant du broyage cryogénique de la composition selon l'invention, éviter des surcharges locales de cette composition, quelle que soit la forme du moule, alimenter en poudre les contre-dépouilles et diminuer l'épaisseur des peaux à produire, il est souhaitable d'introduire, au sein de la composition selon l'invention, un agent d'écoulement pour des poudres de compositions polyoléfiniques provenant du broyage cryogénique et destinées au procédé slush molding.

Cet agent d'écoulement est souhaitablement une silice précipitée, de forme sphérique, ou une alumine, éventuellement greffée en surface par un silane ou par une huile de silicone. Dans le cas où la silice précipitée ou l'alumine sont greffées, elles ont la propriété d'abaisser ponctuellement la viscosité à chaud de la composition et de pénétrer ainsi plus facilement dans la peau et d'y être bien dispersée.

La quantité d'agent d'écoulement entrant dans la composition selon l'invention est comprise entre 0,1 et 10 parties et préférentiellement entre 0,1 et 5 parties en poids pour 100 parties en poids des composants "a" et "b".

A titre illustratif, une silice précipitée et greffée, commercialisée par DEGUSSA sous la référence SIPERNAT D10, mise en oeuvre dans la composition selon l'invention comme agent d'écoulement, dispose des caractéristiques suivantes :
- poudre blanche, meuble, hydrophobe
- surface spécifique BET (norme DIN 66131) : 90m²g⁻¹
- diamètre moyen des agglomérats : 5 µm
- densité tassée (norme DIN-ISO 787/XI) : 100 g/l⁻¹

Certaines matières minérales pulvérulentes peuvent être également introduites dans la composition selon l'invention : elles peuvent être choisies parmi des sels et/ou des oxydes minéraux ayant subi ou non un traitement de surface, tels que les carbonates de calcium, de magnésium, de zinc, la dolomie, la chaux, la magnésie, le trihydroxyde d'aluminium, l'alumine, des argiles, préférentiellement le talc, le kaolin, le mica, la bentonite, la wollastonite, les fibres et billes de verre.

Enfin, d'autres matières pulvérulentes organiques d'origine naturelle ou synthétique peuvent aussi être introduites, telles que par exemple des colorants, le noir de carbone ou une cire de polypropylène finement broyée.

Toutes ces matières pulvérulentes peuvent être mises en oeuvre seules ou en combinaison, et éventuellement introduites lors de l'extrusion avant granulation (compoundage).

Les dimensions de ces matières minérales sont généralement comprises entre 0,01 et 300 µm et préférentiellement entre 0,1 et 100 µm.

Ces matières minérales pulvérulentes peuvent être introduites dans les compositions selon l'invention à raison de 0,1 à 10 parties et préférentiellement de 0,1 à 5 parties en poids pour 100 parties en poids des composants "a" et "b".

Les compositions selon l'invention peuvent être préparées en réacteur ou par extrusion ou par mélange poudre-poudre. Elles peuvent être en outre soumises à réticulation par peroxyde ou silane, ou à greffage par acide acrylique, acide méthacrylique, anhydride maléique ou par les acrylates ou méthacrylates d'alkyle dans lesquels l'alkyle est une chaîne hydrocarbonée en C₁ à C₈.

La composition selon l'invention est mise en oeuvre pour la réalisation par le procédé slush molding de peaux destinées à équiper des inserts moussés ou non, tels que par exemple des planches de bord, répondant, à travers des tests, aux plus hautes exigences des constructeurs automobiles.

Dans le cas où la composition ne contient pas un agent de démoulage interne, l'agent de démoulage peut être externe et, dans ce cas, il est directement déposé sur la surface du moule. Cet agent de démoulage externe peut être choisi dans le groupe constitué par la famille des silicones, les naphtes aliphatiques et aromatiques, et les polyphosphatides ou les huiles bien connues de l'homme de métier.

Mais, de plus, l'agent de démoulage, qu'il soit interne ou externe, peut être remplacé par un traitement de surface du moule le rendant anti-adhérent.

L'invention sera mieux comprise grâce aux exemples illustratifs et non limitatifs décrits ci-après.

### Exemple 1

Cet exemple illustre une composition selon l'invention, mise en oeuvre ultérieurement, dans la fabrication de planches de bord moussées.

Les divers composants constituant la composition selon l'invention étaient les suivants :
- composant "a" : matrice polymère : 70 parties en poids d'un mélange de polypropylène et d'élastomère se décomposant en :
   . 60 parties en poids de polypropylène, commercialisé par REXENE sous la dénomination REXFLEX 2330;
   . 10 parties en poids d'un produit composé de polypropylène et d'EPDM totalement réticulé, commercialisé par AES sous la dénomination SANTOPRENE 121-50 M 100
- composant "b" : copolymère d'éthylène-octène contenant 25 % d'octène (commercialisé sous la dénomination ENGAGE, référence SM 8400 par DOW CHEMICAL) : 30 parties en poids
- composant "c" : agent de démoulage (stéarate de magnésium) : 0,2 partie en poids pour 100 parties de "a" et "b".

A cet agent de démoulage a été adjoint un agent d'écoulement, à raison de 0,3 partie en poids pour 100 parties de "a" et "b", qui est une silice précipitée, de forme sphérique, sur laquelle est greffée une huile siliconée.

Tous ces composants, hormis l'agent d'écoulement ont été introduits dans une extrudeuse bi-vis qui produisait des granulés à partir du mélange de ces divers composants. Les granulés ainsi préparés ont été soumis à un broyage cryogénique (en présence d'azote liquide) à une température comprise entre -40°C et -70°C.

A la sortie dudit broyage on recueillait la composition thermoplastique polyoléfinique selon l'invention sous la forme d'une fine poudre dont la granulométrie médiane était d'environ 250 µm et la granulométrie maximale d'environ 350 µm.

L'agent d'écoulement précité a été introduit dans la poudre résultant du broyage cryogénique, au moyen d'un mélangeur rapide (Henschel).

Des essais d'écoulement de la poudre et de réalisation de peaux au moyen de cette poudre ont été effectués sur un moule de nickel chauffé à une température comprise entre 200°C et 240°C et ont permis d'obtenir des peaux de bonne qualité pour planche de bord à mousser, d'épaisseur régulière (1 mm).

Puis des planches de bord moussées ont été réalisées et soumises à des tests de qualification pour les constructeurs automobiles : elles se sont révélées être conformes au cahier des charges.

### Exemple 2

Cet exemple illustre une autre composition selon l'invention, mise en oeuvre ultérieurement, dans la fabrication de planches de bord moussées non laquées.

Les divers composants constituant la composition selon l'invention étaient les suivants :
- composant "a" : matrice polymère : 90 parties en poids d'un mélange de polypropylène et d'élastomère se décomposant en :
   . 70 parties en poids de polypropylène, commercialisé par REXENE sous la dénomination REXFLEX D400;
   . 20 parties en poids d'un produit composé de polypropylène et d'EPDM totalement réticulé, commercialisé par AES sous la dénomination SANTOPRENE 121-50 M 100.
- composant "b" : copolymère d'éthylène-octène contenant 25 % d'octène (commercialisé sous la dénomination ENGAGE, référence SM 8400 par DOW CHEMICAL) : 10 parties en poids
- composant "c" : agent de démoulage interne : 0 partie.

Un agent d'écoulement a été utilisé à raison de 0,2 partie en poids pour 100 parties de "a" et "b". Cet agent est une silice précipitée, de forme sphérique, sur laquelle est greffée une huile siliconée, auquel on a adjoint 0,5 partie en poids d'une silice commercialisée par DEGUSSA sous la dénomination SIPERNAT 22S.

Tous ces composants, hormis l'agent d'écoulement ont été introduits dans une extrudeuse bi-vis qui produisait des granulés à partir du mélange de ces divers composants. Les granulés ainsi préparés ont été soumis à un broyage cryogénique (en présence d'azote liquide) à une température comprise entre -40°C et -70°C.

A la sortie dudit broyage on recueillait la composition thermoplastique polyoléfinique selon l'invention sous la forme d'une fine poudre dont la granulométrie médiane était d'environ 250 µm et la granulométrie maximale d'environ 350 µm.
L'agent d'écoulement précité a été introduit dans la poudre résultant du broyage cryogénique, au moyen d'un mélangeur rapide (Henschel).

Des essais d'écoulement de la poudre et de réalisation de peaux au moyen de cette poudre ont été effectués sur un moule de nickel chauffé à une température comprise entre 200°C et 240°C et traité avec un agent de démoulage externe (commercialisé par DIATEX sous la dénomination ZYVAX). Ces essais ont permis d'obtenir des peaux de bonne qualité pour planche de bord à mousser, d'épaisseur régulière (1 mm).

Puis des planches de bord moussées ont été réalisées et soumises à des tests de qualification pour les constructeurs automobiles : elles se sont révélées être très proches du cahier des charges.

### Exemple 3

Cet exemple illustre également une composition selon l'invention, mise en oeuvre ultérieurement, dans la fabrication de planches de bord moussées sans prétraitement et non laquées.

Les divers composants constituant la composition selon l'invention étaient les suivants :
- composant "a" : matrice polymère : 70 parties en poids d'un mélange de polypropylène et d'élastomère se décomposant en :
   . 50 parties en poids de polypropylène commercialisé sous la dénomination HIFAX CA131G par MONTELL;
   . 20 parties en poids d'un produit composé de polypropylène et d'EPDM totalement réticulé, commercialisé par AES sous la dénomination SANTOPRENE 121-50 M 100;
- composant "b" : copolymère d'éthylène-acrylate d'alkyle-anhydride maléique (commercialisé par ATOCHEM sous la dénomination LOTADER) : 30 parties en poids
- composant "c" : agent de démoulage : 0 partie.

Un agent d'écoulement a été mis en oeuvre à raison de 0,2 partie en poids pour 100 parties de "a" et "b", qui est une silice précipitée, de forme sphérique, sur laquelle est greffée une huile siliconée, auquel a été adjoint 0,5 partie en poids d'une silice commercialisée par DEGUSSA sous la dénomination SIPERNAT 225.

Tous ces composants, hormis l'agent d'écoulement ont été introduits dans une extrudeuse bi-vis qui produisait des granulés à partir du mélange de ces divers composants.
Les granulés ainsi préparés ont été soumis à un broyage cryogénique (en présence d'azote liquide) à une température comprise entre -40°C et -70°C.

A la sortie dudit broyage on recueillait la composition thermoplastique polyoléfinique selon l'invention sous la forme d'une fine poudre dont la granulométrie médiane était d'environ 250 µm et la granulométrie maximale d'environ 350 µm.

L'agent d'écoulement précité a été introduit dans la poudre résultant du broyage cryogénique, au moyen d'un mélangeur rapide (Henschel).

Des essais d'écoulement de la poudre et de réalisation de peaux au moyen de cette poudre ont été effectués sur un moule de nickel chauffé à une température comprise entre 200°C et 240°C et ont permis d'obtenir des peaux de bonne qualité pour planche de bord à mousser, d'épaisseur régulière (1 mm).

Puis des planches de bord moussées ont été réalisées et soumises à des tests de qualification pour les constructeurs automobiles : elles se sont révélées être également très proche du cahier des charges.

## Revendications

1. Composition thermoplastique polyoléfinique ayant des propriétés élastiques, se présentant sous la forme d'une poudre, destinée à la production de peaux, par écoulement libre sur un moule chaud, qui contient des fractions, l'une étant formée d'homo ou de copolymère à base de propylène, une autre étant formée d'un copolymère à base d'éthylène, et la dernière étant formée d'un élastomère, **caractérisée en ce qu'**elle se compose :
a) de 97 à 5 parties en poids et préférentiellement de 95 à 10 parties en poids d'une matrice composée d'au moins un polymère contenant au moins 50 % en mole de propylène et d'au moins un élastomère polyoléfinique au moins partiellement réticulé ;
b) de 3 à 95 parties en poids et préférentiellement de 5 à 90 parties en poids d'au moins un polymère contenant au moins 50 % en mole d'éthylène ;
c) de 0 à 6 parties en poids d'un agent de démoulage interne pour 100 parties en poids des composants "a" et "b".

2. Composition thermoplastique selon la revendication 1, **caractérisée en ce que** la matrice polymère "a" se compose, exprimée en % en poids :
- de 5 à 95 % et préférentiellement de 80 à 20 % en poids d'au moins un polymère contenant au moins 50 % en mole de propylène ;
- et de 95 à 5 % et préférentiellement de 20 à 80 % en poids d'au moins un élastomère polyoléfinique au moins partiellement réticulé.

3. Composition selon l'une quelconque des revendications 1 ou 2, **caractérisée en ce que** le polymère contenant au moins 50 % en mole de propylène de la matrice polymère "a" est choisi dans le groupe constitué par le polypropylène homopolymère semi-cristallin, un copolymère semi-cristallin de propylène-éthylène, un mélange de polypropylène homopolymère semi-cristallin et d'un copolymère semi-cristallin de propylène-éthylène, le polypropylène (homopolymère) à blocs amorphes et semi-cristallins, les copolymères de propylène-éthylène ou d'alpha-oléfine à blocs amorphes et semi-cristallins.

4. Composition selon l'une quelconque des revendications 1 à 3, **caractérisée en ce que** l'élastomère polyoléfinique, au moins partiellement réticulé, de la matrice polymère "a" est l'un des élastomères appartenant au groupe constitué par l'éthylène-propylène-caoutchouc (EPR), l'éthylène-propylène-diène-monomère (EPDM), le styrène-butadiène-styrène (SBS), le styrène-éthylène-butadiène-styrène (SEBS), le styrène-butadiène-caoutchouc (SBR), au moins partiellement réticulé.

5. Composition selon l'une quelconque des revendications 1 à 3, **caractérisée en ce que** l'élastomère polyoléfinique au moins partiellement réticulé, de la matrice polymère "a" est un mélange de polypropylène avec au moins un des élastomères éthylène-propylène-caoutchouc (EPR), éthylène-propylène-diène monomère (EPDM) dont la fraction élastomérique est au moins partiellement réticulée.

6. Composition selon l'une quelconque des revendications 1 à 5, **caractérisée en ce que** les composants de la matrice polymère "a" sont soumis à un greffage chimique au moyen d'acide acrylique, d'acide méthacrylique, d'anhydride maléique, d'acrylates ou méthacrylates d'alkyle dans lesquels l'alkyle est une chaîne hydrocarbonée en C₁ à C₈.

7. Composition selon l'une quelconque des revendications 1 à 6, **caractérisée en ce que** le polymère contenant au moins 50 % en mole d'éthylène formant le constituant "b", est choisi dans le groupe constitué par le polyéthylène de basse densité (PEBD), le polyéthylène linéaire de basse densité (PEBDL), un mélange de polyéthylène de basse densité (PEBD) avec un polyéthylène haute densité (PEHD), ce mélange contenant au plus 50 % de PEHD, un copolymère d'éthylène-alpha-oléfine, dans lequel l'alpha-oléfine est un motif en C₃ à C₁₀ et, plus précisément, des copolymères d'éthylène-octène (POE) comportant entre 5 et 40 % en poids d'octène, d'éthylène-téréphtalate (PET), d'éthylène-vinylacétate (EVA), d'éthylène-acrylate d'alkyle, d'éthylène -méthacrylate d'alkyle, dans lesquels l'alkyle est une chaîne hydrocarbonée en C₁ à Ce éventuellement modifiée par de l'anhydride maléïque, un copolymère d'éthylène et de tétrafluoroéthylène, des ionomères salifiés ou non.

8. Composition selon la revendication 7, **caractérisée en ce que** le polymère contenant au moins 50 % en mole d'éthylène formant le constituant "b" a un début de plage de fusion au plus égal à 140° C.

9. Composition selon l'une quelconque des revendications 1 à 8, **caractérisée en ce que** l'agent de démoulage interne formant le composant "c" est choisi dans le groupe comprenant la famille des dérivés montaniques et d'ester montaniques, les sels de stéarate, les amines, les amides, les résines hydrocarbonées hydrogénées, les cires de polyéthylène, polypropylène et copolymère éthylène/acétate de vinyle (EVA), les résines de copolymérisation de monomères aliphatiques et/ou aromatiques.

10. Composition selon l'une quelconque des revendications 1 à 8, **caractérisée en ce que** l'agent de démoulage interne formant le composant "c" est choisi dans le groupe formé par les stéarates alcalino-terreux, dont le stéarate de calcium, et les amides de l'acide stéarique (C₁₇H₃₅-CONH₂) dont l'éthylène-bis-stéaramide (EBS) mis en oeuvre seuls ou en mélange.

11. Composition selon l'une quelconque des revendications 1 à 8, **caractérisée en ce que** l'agent de démoulage interne formant le composant "c" est le stéarate de magnésium.

12. Composition selon l'une quelconque des revendications 9 à 11, **caractérisée en ce que** l'agent de démoulage interne est introduit à raison de 0,1 à 6 parties en poids et préférentiellement à raison de 0,5 à 3 parties en poids pour 100 parties en poids des composants "a" et "b".

13. Composition selon l'une quelconque des revendications 1 à 12, **caractérisée en ce qu'**elle comporte également des adjuvants qui sont des stabilisants thermiques ou photochimiques, des lubrifiants, des antistatiques, des ignifugeants, des anti-oxydants.

14. Composition selon l'une quelconque des revendications 1 à 13, **caractérisée en ce qu'**elle comporte un agent d'écoulement.

15. Composition selon la revendication 14, **caractérisée en ce que** l'agent d'écoulement est une silice précipitée de forme sphérique ou une alumine éventuellement greffée en surface par un silane ou par une huile siliconée.

16. Composition selon l'une quelconque des revendications 14 ou 15, **caractérisée en ce que** la quantité d'agent d'écoulement est comprise entre 0,1 et 10 parties et préférentiellement entre 0,1 et 5 parties en poids pour 100 parties en poids des composants "a" et "b".

17. Composition selon l'une quelconque des revendications 1 à 16, **caractérisée en ce qu'**elle contient des matières minérales pulvérulentes choisies parmi les sels et/ou les oxydes minéraux ayant subi ou non un traitement de surface appartenant au groupe constitué par les carbonates de calcium, de magnésium, de zinc, la dolomie, la chaux, la magnésie, le trihydroxyde d'aluminium, l'alumine, des argiles, préférentiellement le talc, le kaolin, le mica, la bentonite, la wollastonite, les fibres et billes de verre.

18. Composition selon l'une quelconque des revendications 1 à 16, **caractérisée en ce qu'**elle contient des matières organiques pulvérulentes d'origine naturelle ou synthétique choisies dans le groupe des colorants, du noir de carbone ou une cire de polypropylène finement broyée.

19. Composition selon l'une quelconque des revendications 17 ou 18, **caractérisée en ce que** les matières pulvérulentes sont mises en oeuvre seules ou en mélange.

20. Composition selon l'une quelconque des revendications 17 à 19, **caractérisée en ce que** les dimensions des matières minérales pulvérulentes sont comprises entre 0,01 et 300 µm et préférentiellement entre 0,1 et 100 µm.

21. Composition selon l'une quelconque des revendications 17 à 20, **caractérisée en ce que** les matières minérales pulvérulentes sont introduites à raison de 0,1 à 10 parties et préférentiellement de 0,1 à 5 parties en poids pour 100 parties en poids des composants "a" et "b".

22. Composition selon l'une quelconque des revendications 1 à 21, **caractérisée en ce qu'**elle est soumise à réticulation au moyen de peroxyde ou de silane.

23. Composition selon l'une quelconque des revendications 1 à 21, **caractérisée en ce qu'**elle est soumise à un greffage au moyen d'acide acrylique, d'acide méthacrylique, anhydride maléique ou les acrylates ou méthacrylates d'alkyle, dans lesquels l'alkyle est une chaîne hydrocarbonée en C₁ à C₈.

24. Procédé de fabrication d'une composition selon l'une quelconque des revendications 1 à 23, **caractérisé en ce que** :
- on effectue le mélange des constituants de la composition dans une zone d'extrusion ;
- on effectue un broyage cryogénique des granulés du mélange dans des conditions telles que l'on obtienne une granulométrie maximale de poudre de l'ordre de 400 µm.

25. Procédé de fabrication d'une composition selon l'une quelconque des revendications 1 à 23, **caractérisé en ce qu'**on effectue une microgranulation par extrusion à travers une microfilière et une coupe rasante en milieu aqueux.

26. Articles moulés, **caractérisés en ce qu'**ils sont obtenus par la mise en oeuvre de la composition selon l'une quelconque des revendications 1 à 23.

## Patentansprüche

1. Thermoplastische Polyolefinzusammensetzung mit elastischen Eigenschaften in Pulverform zur Herstellung von Deckschichten durch freies Fließen über ein heißes Formwerkzeug, die Fraktionen enthält, von denen eine aus einem Propylen-Homopolymer oder -Copolymer, eine weitere aus einem Ethylen-Copolymer und die letzte aus einem Elastomer gebildet wird, **dadurch gekennzeichnet, daß** sie sich aus:
a) 97 bis 5 Gewichtsteilen und vorzugsweise 95 bis 10 Gewichtsteilen einer Matrix aus mindestens einem mindestens 50 Mol-% Propylen enthaltenden Polymer und mindestens einem zumindest teilweise vernetzten Polyolefin-Elastomer,
b) 3 bis 95 Gewichtsteilen und vorzugsweise 5 bis 90 Gewichtsteilen mindestens eines mindestens 50 Mol-% Ethylen enthaltenden Polymers und
c) 0 bis 6 Gewichtsteilen eines internen Formtrennmittels pro 100 Gewichtsteile der Komponenten "a" und "b"
zusammensetzt.

2. Thermoplastische Zusammensetzung nach Anspruch 1, **dadurch gekennzeichnet, daß** die Polymermatrix "a" in Gewicht prozent sich aus:
- 5 bis 95 Gew.-% und vorzugsweise 80 bis 20 Gew.-% mindestens eines mindestens 50 Mol-% Propylen enthaltenden Polymers und
- 95 bis 5 Gew.-% und vorzugsweise 20 bis 80 Gew.-% mindestens eines zumindest teilweise vernetzten Polyolefin-Elastomers
zusammensetzt.

3. Zusammensetzung nach einem der Ansprüche 1 oder 2, **dadurch gekennzeichnet, daß** das mindestens 50 Mol-% Propylen enthaltende Polymer der Polymermatrix "a" aus der Gruppe bestehend aus teilkristallinem homopolymerem Polypropylen, einem teilkristallinen Propylen-Ethylen-Copolymer, einer Mischung aus teilkristallinem homopolymerem Polypropylen und einem teilkristallinen Propylen-Ethylen-Copolymer, (homopolymerem) Polypropylen mit amorphen und teilkristallinen Blöcken und Propylen-Ethylen- oder alpha-Olefin-Copolymeren mit amorphen und teilkristallinen Blöcken ausgewählt ist.

4. Zusammensetzung nach einem der Ansprüche 1 bis 3, **dadurch gekennzeichnet, daß** das zumindest teilweise vernetzte Polyolefin-Elastomer der Polymermatrix "a" aus der Gruppe bestehend aus zumindest teilweise vernetztem Ethylen-Propylen-Kautschuk (EPR), Ethylen-Propylen-Dien-Monomer (EPDM), Styrol-Butadien-Styrol (SBS), Styrol-Ethylen-Butadien-Styrol (SEBS) und Styrol-Butadien-Kautschuk (SBR) ausgewählt ist.

5. Zusammensetzung nach einem der Ansprüche 1 bis 3, **dadurch gekennzeichnet, daß** das zumindest teilweise vernetzte Polyolefin-Elastomer der Polymermatrix "a" aus einer Mischung aus Polypropylen und mindestens einem der Elastomere Ethylen-Propylen-Kautschuk (EPR) und Ethylen-Propylen-Dien-Monomer (EPDM) mit zumindest teilweise vernetztem elastomerem Anteil besteht.

6. Zusammensetzung nach einem der Ansprüche 1 bis 5, **dadurch gekennzeichnet, daß** die Komponenten der Polymermatrix "a" einer chemischen Pfropfung mit Acrylsäure, Methacrylsäure, Maleinsäureanhydric oder Alkylacrylaten oder -methacrylaten, in denen Alkyl für eine C₁- bis C₈-Kohlenwasserstoffkette steht, unterworfen werden.

7. Zusammensetzung nach einem der Ansprüche 1 bis 6, **dadurch gekennzeichnet, daß** das den Bestandteil "b" bildende, mindestens 50 Mol-% Ethylen enthaltende Polymer aus der Gruppe bestehend aus Polyethylen niedriger Dichte (LDPE), linearem Polyethylen niedriger Dichte (LLDPE), einer Mischung aus Polyethylen niedriger Dichte (LDPE) und Polyethylen hoher Dichte (HDPE) mit einem HDPE-Gehalt von höchstens 50%, einem Ethylenalpha-Olefin-Copolymer, in dem das alpha-Olefin aus einer C₃- bis C₁₀-Einheit besteht, und insbesondere Ethylen-Octen-Copolymeren (POE) mit zwischen 5 und 40 Gew.-% Octen, Ethylen-Terephthalat-Copolymeren (PET), Ethylen-Vinylacetat-Copolymeren (EVA), Ethylen-Alkylacrylat-Copolymeren, Ethyler-Alkylmethacrylat-Copolymeren, in denen die Alkylgruppe aus einer gegebenenfalls durch Maleinsäureanhydrid modifizierten C₁- bis C₈-Kohlenwasserstoffkette besteht, einem Ethylen-Tetrafluorethylen-Copolymer und in Salzform Ionomeren ausgewählt ist.

8. Zusammensetzung nach Anspruch 7, **dadurch gekennzeichnet, daß** das den Bestandteil "b" bildende, mindestens 50 Mol-% Ethylen enthaltende Polymer eine Schmelzbereichsanfangstemperatur von höchstens 140°C aufweist.

9. Zusammensetzung nach einem der Ansprüche 1 bis 8, **dadurch gekennzeichnet, daß** das die Komponente "c" bildende interne Formtrennmittel aus der Gruppe enthaltend die Familie der Montansäurederivate und Montansäureester, Stearatsalze, Amine, Amide, hydrierte Kohlenwasserstoffharze, Polyethylen-Wachse, Polypropylen-Wachse, Ethylen-Vinylacetat-Wachse (EVA-Wachse) und durch Copolymerisation von aliphatischen und/oder aromatischen Monomeren erhaltene Harze augewählt ist.

10. Zusammensetzung nach einem der Ansprüche 1 bis 8, **dadurch gekennzeichnet, daß** das die Komponente "c" bildende interne Formtrennmittel aus der Gruppe bestehend aus Erdalkalimetallstearaten, darunter Calciumstearat, und Stearinsäureamiden (C₁₇H₃₅-CONH₂), darunter Ethylenbisstearamid (EBS), entweder einzeln oder im Gemisch, ausgewählt ist.

11. Zusammensetzung nach einem der Ansprüche 1 bis 8, **dadurch gekennzeichnet, daß** der Komponent "c" bildende interne Formtrennmittel aus Magnesiumstearat besteht.

12. Zusammensetzung nach einem der Ansprüche 9 bis 11, **dadurch gekennzeichnet, daß** das interne Formtrennmittel in einer Menge von 0,1 bis 6 Gewichtsteilen und vorzugsweise in einer Menge von 0,5 bis 3 Gewichtsteilen pro 100 Gewichtsteile der Komponenten "a" und "b" eingearbeitet wird.

13. Zusammensetzung nach einem der Ansprüche 1 bis 12, **dadurch gekennzeichnet, daß** sie außerdem Hilfsstoffe enthält, die aus thermischen und photochemischen stabilisierenden wirkenden Mittel, Gleitmittel, Antistatika, Flammhemmer und Antioxidantien bestehen.

14. Zusammensetzung nach einem der Ansprüche 1 bis 13, **dadurch gekennzeichnet, daß** sie ein Fließmittel enthält.

15. Zusammensetzung nach Anspruch 14, **dadurch gekennzeichnet, daß** das Fließmittel aus einer kugelförmigen Fällungskieselerde oder einem gegebenenfalls mit einem Silan oder einem Silikonöl an der Oberfläche gepfropften Aluminiumoxid besteht.

16. Zusammensetzung nach Anspruch 14 oder 15, **dadurch gekennzeichnet, daß** die Menge an Fließmittel zwischen 0,1 und 10 Gewichtsteilen und vorzugsweise zwischen 0,1 und 5 Gewichtsteilen pro 100 Gewichtsteile der Komponenten "a" und "b" liegt.

17. Zusammensetzung nach einem der Ansprüche 1 bis 16, **dadurch gekennzeichnet, daß** sie pulverförmige anorganische Substanzen enthält, die aus gegebenenfalls oberflächenbehandelten anorganischen Salzen und/oder Oxiden aus der Gruppe bestehend aus Calciumcarbonat, Magnesiumcarbonat, Zinkcarbonat, Dolomit, Kalk, Magnesiumoxid, Aluminiumtrihydroxid, Aluminiumoxid, Tonen, vorzugsweise Talk, Kaolin, Glimmer, Bentonit, Wollastonit und Glasfasern und -kugeln ausgewählt sind.

18. Zusammensetzung nach einem der Ansprüche 1 bis 16, **dadurch gekennzeichnet, daß** sie pulverförmige organische Substanzen natürlicher oder synthetischer Herkunft enthält, die aus der Gruppe bestehend aus Farbmitteln, Ruß oder feingemahlenem Polypropylenwachs ausgewählt sind.

19. Zusammensetzung nach Anspruch 17 oder 18, **dadurch gekennzeichnet, daß** die pulverförmigen Substanzen einzeln oder im Gemisch eingesetzt werden.

20. Zusammensetzung nach einem der Ansprüche 17 bis 19, **dadurch gekennzeichnet, daß** die Größe der pulverförmigen anorganischen Substanzen zwischen 0,01 und 300 µm und vorzugsweise zwischen 0,1 und 100 µm liegt.

21. Zusammensetzung nach einem der Ansprüche 17 bis 20, **dadurch gekennzeichnet, daß** die pulverförmigen anorganischen Substanzen in einer Menge von 0,1 bis 10 Gewichtsteilen und vorzugsweise in einer Menge von 0,1 bis 5 Gewichtsteilen pro 100 Gewichtsteile der Komponenten "a" und "b" eingearbeitet werden.

22. Zusammensetzung nach einem der Ansprüche 1 bis 21, **dadurch gekennzeichnet, daß** sie einer Vernetzung mit Peroxid oder Silan unterworfen wird.

23. Zusammensetzung nach einem der Ansprüche 1 bis 21, **dadurch gekennzeichnet, daß** sie einer Pfropfung mit Acrylsäure, Methacrylsäure, Maleinsäureanhydrid oder Alkylacrylaten oder -methacrylaten, in denen Alkyl für eine C₁- bis C₈-Kohlenwasserstoffkette steht, unterworfen wird.

24. Verfahren zur Herstellung einer Zusammensetzung nach einem der Ansprüche 1 bis 23, **dadurch gekennzeichnet, daß** man:
- die Bestandteile der Zusammensetzung in einer Extrusionszone vermischt und
- das Mischungsgranulat unter solchen Bedingungen kryogen vermahlt, daß man eine maximale Pulverteilchengröße von etwa 400 µm erhält.

25. Verfahren zur Herstellung einer Zusammensetzung nach einem der Ansprüche 1 bis 23, **dadurch gekennzeichnet, daß** man eine Mikrogranulation durch Extrusion durch eine Mikrodüse und Abschlagen in wäßrigem Medium durchführt.

26. Formkörper, **dadurch gekennzeichnet, daß** sie durch Verwendung der Zusammensetzung nach einem der Ansprüche 1 bis 23 erhalten werden.

## Claims

1. Polyolefin thermoplastic composition having elastic properties, being in the form of a powder, intended for the production of skins, by slush moulding, which contains fractions, one being formed of a propylenebased homopolymer or copolymer, another being formed of an ethylene-based copolymer and the final one being formed of an elastomer, **characterised in that** it is composed of:
a) from 97 to 5 parts by weight and preferably from 95 to 10 parts by weight of a matrix composed of at least one polymer containing at least 50 mol% of propylene and of at least one at least partially crosslinked polyolefin elastomer;
b) from 3 to 95 parts by weight and preferably from 5 to 90 parts by weight of at least one polymer containing at least 50 mol% of ethylene;
c) from 0 to 6 parts by weight of an internal mould-release agent per 100 parts by weight of components "a" and "b".

2. Thermoplastic composition according to Claim 1, **characterised in that** the polymer matrix "a" is composed of, expressed in % by weight:
- from 5 to 95% and preferably from 80 to 20% by weight of at least one polymer containing at least 50 mol% of propylene;
- and from 95 to 5% and preferably from 20 to 80% by weight of at least one at least partially crosslinked polyolefin elastomer.

3. Composition according to any one of Claims 1 and 2, **characterised in that** the polymer containing at least 50 mol% of propylene of the polymer matrix "a" is chosen from the group consisting of semicrystalline homopolymer polypropylene, a semicrystalline propylene-ethylene copolymer, a blend of semicrystalline homopolymer polypropylene and of a semicrystalline propylene-ethylene copolymer, (homopolymer) polypropylene having amorphous and semicrystalline blocks, and propylene-ethylene or alpha-olefin copolymers having amorphous and semicrystalline blocks.

4. Composition according to any one of Claims 1 to 3, **characterised in that** the at least partially crosslinked polyolefin elastomer of the polymer matrix "a" is one of the elastomers at least partially crosslinked belonging to the group consisting of ethylene-propylene rubber (EPR), ethylene-propylenediene-monomer (EPDM), styrene-butadiene-styrene (SBS), styrene-ethylene-butadiene-styrene (SEBS) and styrenebutadiene rubber (SBR).

5. Composition according to any one of Claims 1 to 3, **characterised in that** the at least partially crosslinked polyolefin elastomer of the polymer matrix "a" is a blend of polypropylene with at least one of the elastomers ethylene-propylene rubber (EPR) and ethylene-propylene-diene monomer (EPDM), the elastomeric fraction of which is at least partially crosslinked.

6. Composition according to any one of Claims 1 to 5, **characterised in that** the components of the polymer matrix "a" are chemically grafted by means of acrylic acid, methacrylic acid, maleic anhydride and alkyl acrylates or methacrylates in which the alkyl is a C₁ to C₈ hydrocarbon chain.

7. Composition according to any one of Claims 1 to 6, **characterised in that** the polymer containing at least 50 mol% of ethylene forming the constituent "b" is chosen from the group consisting of low-density polyethylene (LDPE), linear low-density polyethylene (LLDPE), a blend of low-density polyethylene (LDPE) and a high-density polyethylene (HDPE), this blend containing at most 50% of HDPE, an ethylene-alphaolefin copolymer in which the alpha-olefin is a C₃ to C₁₀ unit and, more specifically, an ethylene-octene copolymer (POE) comprising between 5 and 40% by weight of octene, polyethylene terephthalate (PET), an ethylene-vinyl acetate copolymer (EVA), an ethylene-alkyl acrylate or ethylene-alkyl methacrylate copolymer in which the alkyl is a C₁ to C₈ hydrocarbon chain optionally modified by maleic anhydride, a copolymer of ethylene and of tetrafluoroethylene, and ionomers which may or may not be in salt form.

8. Composition according to Claim 7, **characterised in that** the polymer containing at least 50 mol% of ethylene forming constituent "b" has a melting range onset temperature at most equal to 140°C.

9. Composition according to any one of Claims 1 to 8, **characterised in that** the internal mould-release agent forming component "c" is chosen from the group comprising the family of montanic derivatives and montanic ester derivatives, stearate salts, amines, amides, hydrogenated hydrocarbon resins, polyethylene, polypropylene and ethylene/vinyl acetate copolymer (EVA) waxes, and aliphatic and/or aromatic monomer copolymerisation resins.

10. Composition according to any one of Claims 1 to 8, **characterised in that** the internal mould-release agent forming component "c" is chosen from the group formed by alkaline-earth stearates, including calcium stearate, and the amides of stearic acid (C₁₇H₃₅-CONH₂), including ethylene-bis-stearamide (EBS), these substances being used alone or as a blend.

11. Composition according to any one of Claims 1 to 8, **characterised in that** the internal mould-release agent forming component "c" is magnesium stearate.

12. Composition according to any one of Claims 9 to 11, **characterised in that** the internal mould-release agent is introduced in an amount of from 0.1 to 6 parts by weight and preferably in an amount of from 0.5 to 3 parts by weight per 100 parts by weight of components "a" and "b".

13. Composition according to any one of Claims 1 to 12, **characterised in that** it also includes additives which are heat or photochemical stabilisers, lubricants, antistatic agents, fire retardants, antioxidants.

14. Composition according to any one of Claims 1 to 13, **characterised in that** it includes a flow agent.

15. Composition according to Claim 14, **characterised in that** the flow agent is a precipitated silica of spherical shape or an alumina optionally grafted on the surface by a silane or by a silicone oil.

16. Composition according to any one of Claims 14 or 15, **characterised in that** the amount of flow agent is between 0.1 and 10 parts and preferably between 0.1 and 5 parts by weight per 100 parts by weight of components "a" and "b".

17. Composition according to any one of Claims 1 to 16, **characterised in that** it contains pulverulent mineral substances chosen from mineral salts and/or oxides, which may or may not have undergone a surface treatment, belonging to the group consisting of calcium carbonate, magnesium carbonate, zinc carbonate, dolomite, lime, magnesia, aluminium trihydroxide, alumina, clays, preferably talc, kaolin, mica, bentonite, wollastonite, and glass fibres and balls.

18. Composition according to any one of Claims 1 to 16, **characterised in that** it contains pulverulent organic substances of natural or synthetic origin which are chosen from the group of colorants, carbon black or a finely ground polypropylene wax.

19. Composition according to any one of Claims 17 or 18, **characterised in that** the pulverulent substances are used alone or as a mixture.

20. Composition according to any one of Claims 17 to 19, **characterised in that** the size of the pulverulent mineral substances is between 0.01 and 300 µm and preferably between 0.1 and 100 µm.

21. Composition according to any one of Claims 17 to 20, **characterised in that** the pulverulent mineral substances are introduced in an amount of from 0.1 to 10 parts and preferably from 0.1 to 5 parts by weight per 100 parts by weight of components "a" and "b".

22. Composition according to any one of Claims 1 to 21, **characterised in that** it is crosslinked by means of a peroxide or a silane.

23. Composition according to any one of Claims 1 to 21, **characterised in that** it is grafted by means of acrylic acid, methacrylic acid, maleic anhydride or alkyl acrylates or methacrylates, in which the alkyl is a C₁ to C₈ hydrocarbon chain.

24. Process for manufacturing a composition according to any one of Claims 1 to 23, **characterised in that**:
- the constituents of the composition are mixed in an extrusion zone;
- the granules of the mixture are cryogenically ground under conditions such that a maximum powder particle size of about 400 µm is obtained.

25. Process for manufacturing a composition according to any one of Claims 1 to 23, **characterised in that** it involves microgranulation by extrusion through a microdie and die-face cutting in an aqueous medium.

26. Moulded articles, **characterised in that** they are obtained by the use of the composition according to any one of Claims 1 to 23.
